# EUROPÄISCHE PATENTSCHRIFT

(11) **EP 1 084 586 B1**
(45) Veröffentlichungstag und Bekanntmachung des Hinweises auf die Patenterteilung: **22.12.2004**
(21) Anmeldenummer: 99936383.1
(22) Anmeldetag: 01.06.1999
(51) Int. Cl.: H04Q 7/38

(54) **VERFAHREN UND FUNKGERÄT ZUR ÜBERTRAGUNG VON NACHRICHTEN**
METHOD AND RADIO DEVICE FOR TRANSMITTING MESSAGES
PROCEDE ET APPAREIL RADIO POUR LA TRANSMISSION DE MESSAGES

(30) Priorität: 03.06.1998 DE 19824782
(43) Veröffentlichungstag der Anmeldung: 21.03.2001
(73) Patentinhaber: SIEMENS AKTIENGESELLSCHAFT, 80333 München (DE)
(72) Erfinder: XU, Wen, D-82008 Unterhaching (DE); MEYER, Jan, D-82362 Weilheim (DE)
(86) Internationale Anmeldenummer: PCT/DE1999/001615
(87) Internationale Veröffentlichungsnummer: WO 1999/063769

(56) Entgegenhaltungen:
- US-A- 5 499 246
- US-A- 5 568 483
- US-A- 5 657 420

## Beschreibung

Die Erfindung betrifft ein Verfahren und ein Funkgerät zur Übertragung von Nachrichten über ein Kommunikationsnetz, insbesondere über ein Mobilfunksystem und eine Steuereinrichtung zur Steuerung dieser Übertragung.

Um eine möglichst flexible und effiziente Nutzung von Übertragungskapazitäten zu gewährleisten, werden Nachrichten in vielen Kommunikationsnetzen in der Form von Datenpaketen übertragen. Beispielsweise werden bei einem GSM (Global System For Mobile Communication)-Mobilfunksystem zu übertragende Nachrichten in Datenpakete, sogenannte Bursts gepackt und anschließend über die Funkschnittstelle übertragen.

Um die Datenpakete separieren und einer bestimmten Verbindung bzw. dem entsprechenden Teilnehmer zuteilen zu können, wird häufig ein Vielfachzugriffsverfahren genutzt. Dazu wird beim GSM-System eine Kombination aus Zeitvielfachzugriff TDMA und Frequenzvielfachzugriff FDMA eingesetzt. Beim FDMA wird das Frequenzband in mehrere gleich große Frequenzkanäle zerlegt. Diese Frequenzkanäle werden durch den Zeitvielfachzugriff TDMA in acht Zeitschlitze aufgeteilt. Die acht Zeitschlitze dieses Frequenzkanals werden zu einem TDMA-Rahmen zusammengefaßt, wobei dieselben Zeitschlitze in aufeinanderfolgenden Rahmen einen physikalischen Kanal ergeben.

Diese physikalischen Kanäle bzw. die entsprechenden Datenpakete werden nach einem festgelegten Schema logischen Kanälen zugeordnet. Bei den logischen Kanälen unterscheidet man grunsätzlich zwei Arten: Signalisierungskanäle zur Übertragung von Signalisierungsinformationen und Verkehrskanäle zur übertragung von Nutzdaten.

Um Nachrichten, insbesondere Sprache mittels der begrenzten Übertragungskapazitäten einer Funkschnittstelle möglichst effizient übertragen zu können, werden diese zu übertragenden Nachrichten vor der Übertragung durch eine Quellcodierung komprimiert und durch eine Kanalcodierung gegen Kanalfehler geschützt. Insbesondere zur Sprachcodierung sind dabei unterschiedliche Verfahren bekannt. So kann beispielsweise im GSM-System Sprache mittels eines Full-Rate-Sprachcodecs, eines Half-Rate-Sprachcodecs oder eines Enhanced-Full-Rate-Sprachcodecs codiert werden, wobei diese Sprachcodecs bzw. die dazu benötigten Rahmenbedingungen bei der Standardisierung schon bekannt bzw. vorherzusehen waren.

Durch den Fortschritt in der Sprachcodierungstheorie sind mittlerweile allerdings neue Sprachcodecs entwickelt worden, mit denen eine noch effizientere bzw. flexiblere Übertragung von Sprache ermöglicht wird. Dabei handelt es sich beispielsweise um sogenannte Adaptive-Multirate-Sprachcodecs, deren Eigenschaften sich an die Übertragungseigenschaften des Übertragungskanals anpassen lassen. Als Sprachcodec wird im Rahmen dieser Anmeldung ein Verfahren zur Encodierung und/oder zur entsprechenden Decodierung bezeichnet, das auch eine Quellen- und/oder Kanalcodierung umfassen kann.

Bei der Standardisierung, Festlegung bzw. Definition eines Übertragungsverfahrens, insbesondere des GSM-Standards, werden die Informationsarten, die mittels einzelner Bitstellen eines Datenpaketes übertragen werden bzw. der Zweck der mittels der einzelnen Bitstellen übertragenen Informationen genau festgelegt, damit die Informationen am Empfänger zweckgemäß verarbeitet und genützt werden können.

Aus der US 5 568 483 ist ein Verfahren zur Formatierung von Daten, die für eine Übertragung vorgesehen sind, bekannt. Dabei werden verschiedene Typen von Daten in verschiedenen Raten in ein einheitlich strukturiertes Übertragungsformat gebracht.

Der Erfindung liegt nun grundsätzlich die Aufgabe zugrunde, eine möglichst effiziente und flexible Ausnutzung von begrenzten Übertragungskapazitäten zu ermöglichen, insbesondere innerhalb eines bereits bestehenden bzw. standardisierten Übertragungsverfahrens und gegebenenfalls mittels entsprechend standardisierter Signalisierungskanäle.

Diese Aufgabe wird durch die Merkmale der unabhängigen Patentansprüche gelöst. Weiterbildungen ergeben sich aus den Unteransprüchen.

Die Erfindung beruht also auf dem Gedanken, Bitgruppen eines Datenpaketes, die bei der Zuordnung dieser Bitgruppe zu einem bestimmten logischen Kanal zur Übertragung der für diese Bitgruppe spezifischen Informationsart nicht benötigt werden, zur Übertragung einer anderen Informationsart, insbesondere von Signalisierungsinformationen zu verwenden, deren Bedeutung bei der Definition der Datenpakete bzw. deren Bitgruppenstruktur noch nicht abzusehen war bzw. deren Übertragung bei der Festlegung des Übertragungsstandards noch nicht als notwendig erachtet wurde.

Dadurch wird erreicht, daß auch nach der Definition eines Übertragungsverfahrens, beispielsweise durch Standardisierung, neue technische Entwicklungen zur verbesserten Nutzung der Übertragungskapazitäten genutzt werden können.

Beim Einbringen der Erfindung in ein Übertragungsverfahren gemäß dem GSM-Standard kann die Stealing-Flag-Bitgruppe eines Normal-Burst-Datenpaketes bei der Zuordnung des Normal-Burst-Datenpaketes zu einem Slow-Associated-Control-Channel zur Übertragung von neuen Signalisierungsinformationen, insbesondere zur Übertragung von Informationen über einen bei der Übertragung von Sprachdaten verwendeten Sprachcodec verwendet werden.

Dadurch wird erreicht, daß auch neuere Entwicklungen und Erkenntnisse der Informations- und Kommunikationstechnik verwendet werden können, um die Übertragung von Nachrichten über ein festgelegtes Übertragungsverfahren, wie den GSM-Standard effizienter und flexibler zu gestalten.

Die Erfindung wird im folgenden anhand bevorzugter Ausführungsbeispiele näher beschrieben, zu deren Erläuterung die nachstehend aufgelisteten Figuren dienen:
- Figur 1: ein Blockschaltbild eines Mobilfunksystems
- Figur 2: eine schematische Darstellung der Zuordnung von Datenpakten zu logischen Kanälen
- Figur 3: eine schematische Darstellung eines Funkgerätes

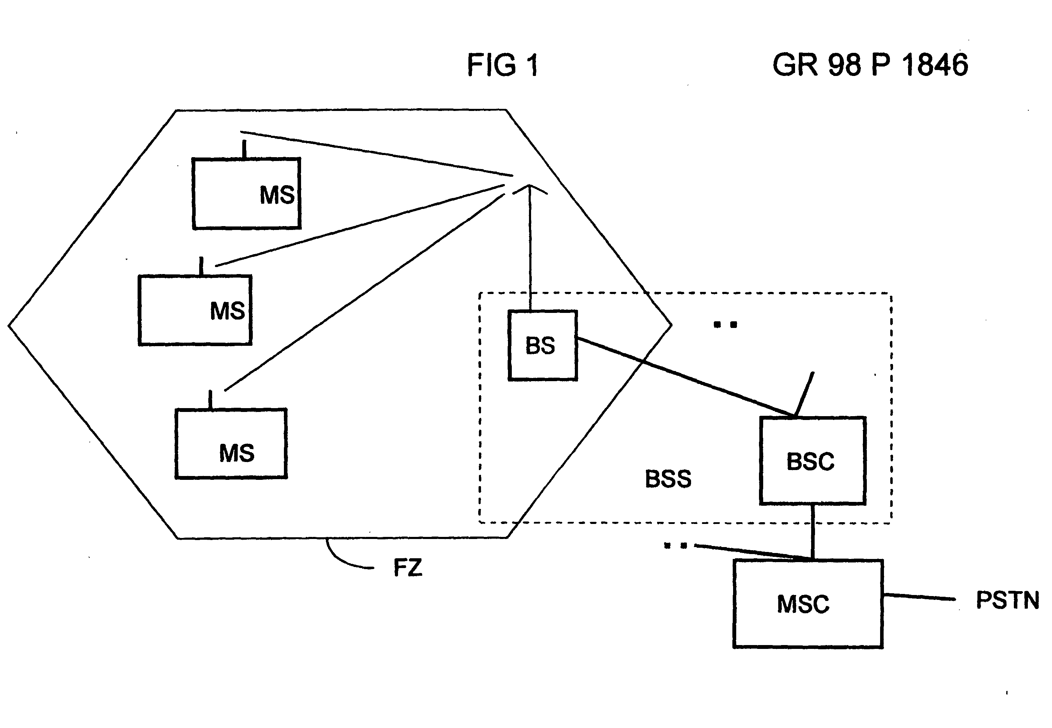

Das in Figur 1 dargestellte Mobilfunksystem entspricht in seiner Struktur einem bekannten GSM-Mobilfunksystem, das aus einer Vielzahl von Mobilvermittlungsstellen MSC besteht, die untereinander vernetzt sind bzw. den Zugang zu einem Festnetz PSTN herstellen. Ferner sind diese Mobilvermittlungsstellen MSC mit jeweils zumindest einem Basisstationscontroller BSC verbunden, der auch durch ein Datenverarbeitungssystem gebildet sein kann. Jeder Basisstationscontroller BSC ist wiederum mit zumindest einer Basisstation BS verbunden. Eine solche Basisstation BS ist ein Funkgerät, das über eine Funkschnittstelle eine Funkverbindung zu Funkgeräten, sogenannten Mobilstationen MS aufbauen kann.

Die Reichweite der Signale einer Basisstation definieren im wesentlichen eine Funkzelle FZ. Die Zuteilung von Ressourcen wie Frequenzbänder zu Funkzellen und damit zu den zu übertragenden Datenpaketen kann durch Steuereinrichtungen wie beispielsweise die Basisstationscontroller BSC gesteuert werden. Basisstationen BS und ein Basisstationscontroller BSC können zu einem Basisstationssystem BSS zusammengefaßt werden.

Das Basisstationssystem BSS ist dabei auch für die Funkkanalverwaltung, die Datenratenanpaßung, die Überwachung der Funkübertragungsstrecke, Hand-Over-Prozeduren, die Verbindungssteuerung und die Zuteilung bzw. Signalisierung der zu verwendenden Sprachcodecs zuständig und übermittelt die dazu nötigen Signalisierungsinformationen zu den Mobilstationen MS. Die Übermittlung derartiger Signalisierungsinformationen kann auch über Signalisierungskanäle erfolgen.

Zur Übertragung von Informationen werden im GSM-System unterschiedliche Datenpakete verwendet. Während eines Zeitschlitzes werden sogenannte Bursts (Datenpakete), die jeweils 156,25 Bitstellen enthalten, übertragen. Ein Burst ist eine Periode auf einem Frequenzträger bzw. in einem Frequenzkanal, welche durch ein digitales Datenpaket moduliert wird. Der Burst repräsentiert also den physikalischen Inhalt eines Zeitschlitzes.

Die Datenpakete unterscheiden sich dabei in ihrer Bitgruppenstruktur. Eine Bitgruppenstruktur entsteht durch-die Zusammenfassung von Bitstellen innerhalb eines Datenpaketes zu Bitgruppen, wobei die Zusammenfassung nach der Art der Informationen, die über die jeweiligen Bitstellen übertragen werden, erfolgt. Jede Informationsart entspricht dabei einem bestimmten Zweck, zu dem diese Information übertragen wird. Im Rahmen der vorliegenden Anmeldung kann auch zwischen folgenden Informationsarten unterschieden werden:
- Nutzinformation,
- Signalisierungsinformation,
- Signalisierungsinformationen, die für einen ersten Verwendungszweck übermittelt werden,
- Signalisierungsinformationen, die für einen zweiten Verwendungszweck übermittelt werden.

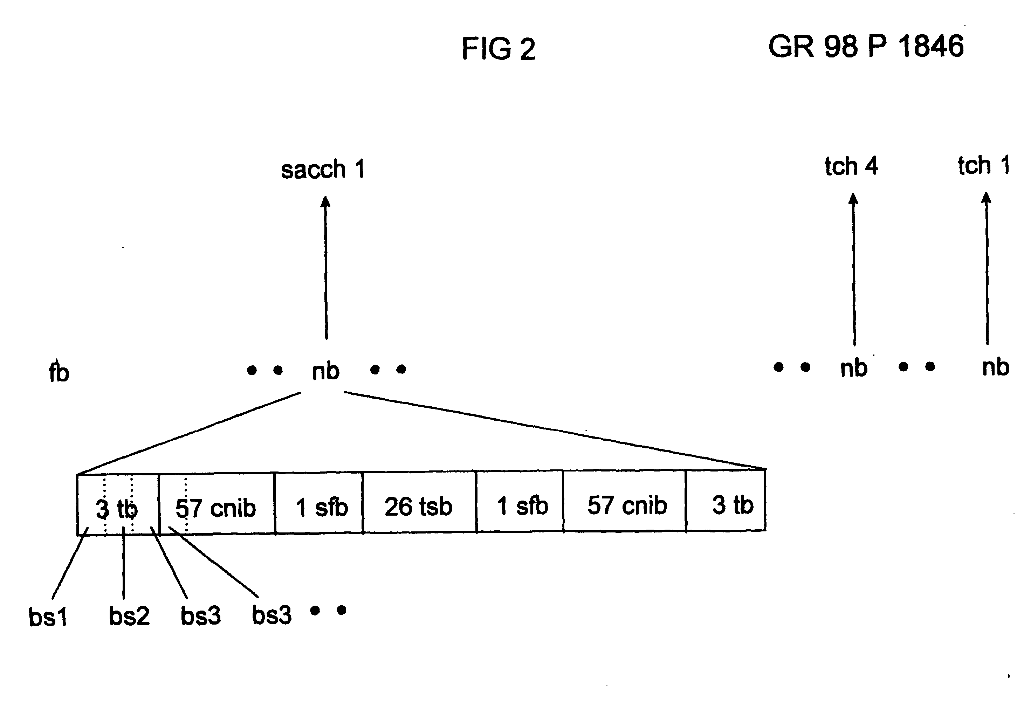

Dies ist in Figur 2 exemplarisch anhand eines Normal-Burst-Datenpaketes nb dargestellt, der zur Übertragung von Nutzund Signalisierungsinformationen mittels der Verkehrs- und Signalisierungskanäle dient. Von den 148 Bitstellen bs (die übrigen 8,25 Bitstellen dienen als Guardperiod) sitzen am Anfang und am Ende drei Tailbits tb. In der Mitte sitzt eine Trainingsbitgruppe bestehend aus 26 Bitstellen tsb, die zum Zweck der Synchronisation und Kanalschätzung übermittelt wird, eingerahmt von je einem Bit, die als Stealing-Flag-Bitgruppe sfb bezeichnet werden. Die Trainingsbitgruppe trennt zwei codierte und meist auch verschlüsselte Nutzdatenbitgruppen mit jeweils 57 Bitstellen cnib voneinander.

Außer dem Normal-Burst-Datenpaket nb gibt es im downlink (BS->MS) noch den Frequency-Correction-Burst fb, der zur Frequenzsynchronisation einer Mobilstation MS verwendet wird, und den Synchronisationsburst, der u.a. Informationen zur zeitlichen Synchronisierung der Mobilstation mit der Basisstation überträgt, und im uplink (MS->BS) den Accessburst, der für den ersten Zugriff der MS auf die BS verwendet wird, wenn noch keine Zweiwegverbindung besteht.

Man unterscheidet bei den logischen Kanälen grundsätzlich zwei Arten: Signalisierungskanäle zur Übertragung von Signalisierungsinformationen, wie beispielsweise den Slow-Associated-Control-Channel sacch oder die Broadcast-Control-Channels, und Verkehrskanäle tch zur Übertragung von Nutzdaten.

Figur 2 zeigt die Zuordnung verschiedener Datenpakete fb nb zu logischen Kanälen, wie einem Slow-Associated-Control-Channel sacch1 oder zu Verkehrskanälen tch4 tch1. Diese Zuordnung erfolgt entsprechend der Zuordnung der physikalischen Kanäle zu den logischen Kanälen.

Jedem Verkehrskanal tch1 ist ein Slow-Associated-Control-Channel sacch 1 zugeordnet, mittels dessen im downlink Signalisierungsinformationen zur Sendeleistungsanpassung, Rahmenausrichtung und Kanalnummern ständig zu beobachtender Nachbarkanäle, und im uplink Signalisierungsinformationen über Empfangspegel (d.h. Signalstärke) und Bitfehlerraten (d.h. Empfangsqualität) übertragen werden.

Meist werden die Normal-Burst-Datenpakete nb Verkehrskanälen tch zugeordnet, wobei die Stealing-Flag-Bitgruppe sfb zur Übertragung von Signalisierungsinformationen verwendet wird, um anzuzeigen, ob ein zur Übertragung von Nutzdaten vorgesehenes Normal-Burst-Datenpaket nb ausnahmsweise für dringende Signalisierungszwecke verwendet bzw. "gestohlen" wird (Verwendungszweck der Stealing-Flag-Bitgruppe sfb).

Auch die Signalisierungsinformationen des Slow-Associated-Control-Channels sacch werden mittels Normal-Burst-Datenpaketen nb übertragen. Allerdings ist im Falle des sacch die ausnahmsweise Verwendung der entsprechenden Normal-Burst-Datenpakete nb zur Übertragung von dringenden Signalisierungsinformationen nicht zulässig. Die Stealing-Flag-Bitgruppe sfb kann daher in diesem Fall nicht zur Übertragung der für sie spezifischen Informationsart verwendet werden und ist daher in diesem Fall eigentlich überflüssig. Daher werden in diesem Fall an diesen beiden Bitstellen sfb standardgemäß jeweils eine "1" übertragen.

Für das GSM-System sind bisher als Sprachcodecs ein Half-Rate-Sprachcodec ein Full-Rate-Sprachcodec und ein Enhanced-Full-Rate-Sprachcodec vorgesehen. Zur Übertragung von Signalisierungsinformationen über den für eine Verbindung bzw. Verkehrskanal tch zu verwendenden bzw. verwendeten Sprachcodec wurden bereits bei der Standardisierung entsprechende Signalisierungskanäle bzw. Bitstellen festgelegt.

In Zukunft sollen Nachrichten auch mittels neuer und verbesserter Sprachcodecs über das GSM-System übertragen werden können. Derzeit wird eine Gruppe neuartiger Sprachcodecs, sogenannte Adaptive-Multirate(AMR)-Sprachcodecs bei ETSI -SMG11 standardisiert. Dabei kann auch eine kombinierte Quellen- und Kanalcodierung durchgeführt werden.

Hauptziele des AMR-Sprachcodecs sind Festnetzqualität der Sprache bei unterschiedlichen Kanal-bedingungen zu erzielen und optimale Verteilung der Kanalkapazität zu gewährleisten. Der Sprachcodec soll unter guten Kanalbedingungen und/oder in hoch ausgelasteten Zellen im Halfrate(HR)-Kanal arbeiten. Er soll unter schlechten Kanalbedingungen dynamisch mit Hilfe des GSM-Intra-Cell-Handover in den Fullrate(FR)-Kanal wechseln können und umgekehrt. Innerhalb eines Kanalmodus (FR oder HR) stehen mehrere Codemodi (code mode) für unterschiedliche Sprach- und Kanalcodierungsraten zur Verfügung, die ebenfalls gemäß der Kanalqualität von einer zur anderen variieren. Somit soll sich unter Berücksichtigung der wechselnden Kanalbedingungen die beste Sprachqualität ergeben.

Im Prinzip gibt es zwei Methoden, diese neu hinzukommenden Signalisierungsinformationen zur Umschaltung zwischen der Gruppe der jetzt existierenden Sprachcodecs (FR, HR und EFR) und den zukünftigen AMR-Sprachcodecs zu übertragen:
- in-band mittels zusätzlicher Bitstellen bs, die ansonsten zu einer besseren Sprachübertragung führen würden;
- out-of-band mittels eines Signalisierungskanals.

Vor allem für eine Tandem Free Operation (TFO),bei der Formatkonvertierungen bei Übertragung der Sprache von einem GSM-System zu einem anderen beispielsweise über ein PSTN vermieden werden können, ist es das Ziel, eine Umschaltung zwischen der Gruppe der jetzt existierenden Sprachcodecs (FR, HR und EFR) und den zukünftigen AMR-Sprachcodecs out-of-band zu signalisieren.

Um Informationen über einen für einen Verkehrskanal tch1 zu verwendenden bzw. verwendeten neuen verbesserten Sprachcodec übertragen zu können, wird nun die Stealing-Flag-Bitgruppe sfb eines Normal-Burst-Datenpaketes nb verwendet, das dem entsprechenden Slow-Associated-Control-Channel sacch1 zugeordnet ist, und damit zur out-of-band Signalisierung über die Verwendung von Sprachcodecs genutzt.

Bei der Verwendung eines AMR-Sprachcodecs im Verkehrskanaltch1 wird an den Bitstellen der Stealing-Flag-Bitgruppe sfb des entsprechenden Slow-Associated-Control-Channels sacch1 jeweils eine "0" übertragen, wodurch die Verwendung eines AMR-Sprachcodecs signalisiert wird. Im Falle der Verwendung der bisherigen Sprachcodecs (ER, HR,EFR) wird an den Bitstellen der Stealing-Flag-Bitgruppe sfb jeweils eine "1" übertragen.

Bei einer Ausführungsvariante der Erfindung genügt es, Informationen darüber zu übermitteln, daß ein anderer als einer der bisher für das übertragungsverfahren definierten Sprachcodecs (ER, HR,EFR) verwendet wird. Detailinformationen über den neuen Sprachcodec können mittels des neuen Sprachcodecs in die übertragenen Nutzdaten gepackt werden oder anstatt derer übertragen werden.

Bei einer anderen Ausgestaltung der Erfindung können Detailinformationen über den neuen Sprachcodec durch bestimmte Kombinationen der Bitstellenbelegung ("0 1" oder"1 0") der Stealing-Flag-Bitgruppe sfb, oder auch der Stealing-Flag-Bitgruppen sfb aufeinanderfolgender Datenpakete, übertragen werden.

Um diese Signalisierungsinformationen über die Verwendung eines neuen Sprachcodecs gegen Kanalfehler zu schützen, können sie zusätzlich kanalcodiert werden. Da die Umschaltung von einem AMR Sprachcodec zu einem bisher bekannten Sprachcodec (z.B. EFR) oder umgekehrt nur sehr langsam erfolgt, ist eine relativ lange Verzögerung der Umschaltung unproblematisch. Daher können die entsprechenden Signalisierungsinformationen mittels mehrerer hintereinander folgender einem sacch zugeordneter Normal-Burst-Datenpakete übertragen werden. Beispielsweise kann ein betroffenes Stealing-Flag-Bit mit einer Rate von 1/6 kanalcodiert werden, und die daraus resultierenden sechs Code-Bits können in drei hintereinander folgenden einem Slow-Associated-Control-Channel sacch zugeordneten Normal-Burst-Datenpaketen übertragen werden.

Anhand der vorliegenden Beschreibung kann die Erfindung auch zur Signalisierung anderer Informationen, wie beispielsweise Umschaltinformationen, in anderen übertragungsverfahren, wie beispielsweise DECT, WB-CDMA oder Multimodeübertragungsverfahren (GSM/WB-CDMA/TD-CDMA) verwendet werden, und die entsprechenden Signalisierungskanäle genutzt werden.

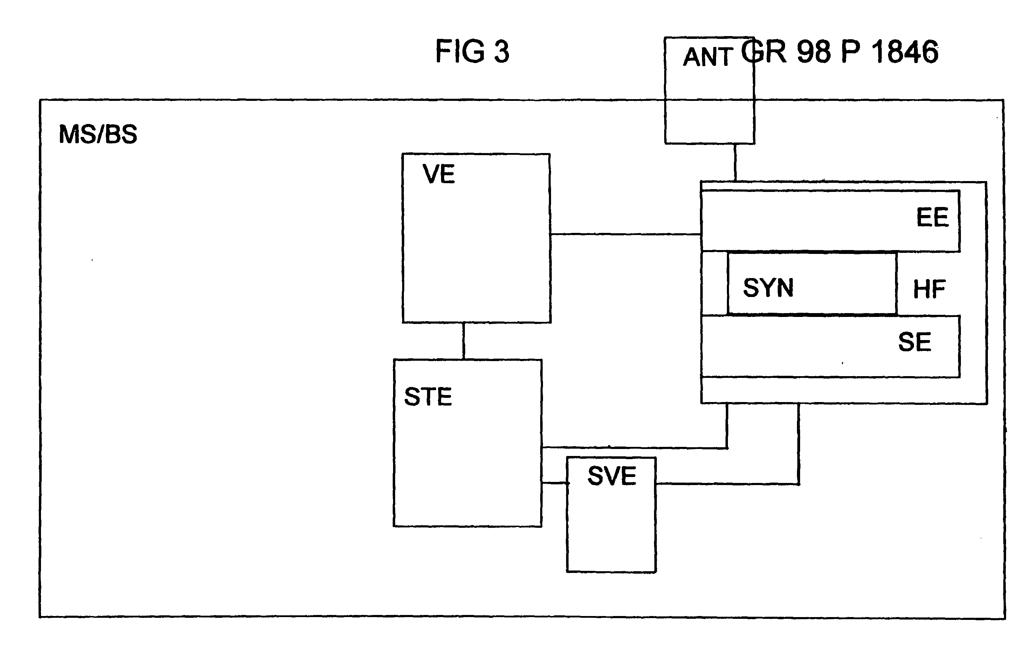

Figur 3 zeigt ein Funkgerät, das eine Basisstation BS oder eine Mobilstation MS sein kann. Es besteht aus einer Steuereinrichtung STE und einer Verarbeitungseinrichtung VE, einer Stromversorgungseinrichtung SVE, einem Hochfrequenzteil HF bestehend aus einer Empfangseinrichtung EE, einer Sendeeinrichtung SE und einem Frequenzsynthesizer SYN und einer Antenneneinrichtung ANT. Die einzelnen Elemente des Funkgerätes sind auch durch Leiterbahnen, Kabel oder Bussysteme miteinander verbunden.

Die Steuereinrichtung STE besteht im wesentlichen aus einem programmgesteuerten Mikrocontroler und die Verarbeitungseinrichtung VE aus einem digitalen Signalprozessor, wobei beide schreibend und lesend auf Speicherbausteine zugreifen können. Der Mikrocontroler steuert und kontrolliert alle wesentlichen Elemente und Funktionen des Funkgerätes und steuert im wesentlichen den Kommunikations- und Signalisierungsablauf, die Zusammenfassung von Bitstellen zu Bitgruppen und die Zuordnung von Datenpaketen zu logischen Kanälen.

Der digitale Signalprozessor, ein Teil des digitalen Signalprozessors oder ein spezieller Prozessor ist für die Durchführung der Sprachencodierung bzw. Sprachdecodierung zuständig. Die Auswahl des Sprachcodecs steuert der Mikrocontroler in Abhängigkeit von empfangenen Signalisierungsinformationen.

Durch Analog/Digital-Wandler werden die analolgen Audiosignale und die analogen vom Hochfrequenzteil HF stammenden Signale in digitale Signale gewandelt und vom digitalen Signalprozessor verarbeitet. Nach der Zusammenfassung zu Datenpaketen werden die digitalen Signale durch Digital/Analog-Wandler wieder in analoge Audiosignale und analoge dem Hochfrequenzteil HF zuzuführende Signale gewandelt. Dazu wird gegebenenfalls eine Modulation bzw. Demodulation durchgeführt.

## Patentansprüche

1. Verfahren zur Übertragung von Nachrichten, bei dem
a) die Übertragung auf der Basis von Datenpaketen (nb) erfolgt
b) ein Datenpaket mehrere Bitstellen (bs) aufweist, denen unterschiedliche Informationsarten (tb,cnib,sfb,tsb) zugeordnet sind,
c) durch eine informationsartspezifische Zusammenfassung von Bitstellen zu Bitgruppen innerhalb eines Datenpaketes eine Bitgruppenstruktur entsteht,
d) Datenpakete gleicher Bitgruppenstruktur unterschiedlichen Arten von logischen Kanälen (sacch1,tch4,tch1) zugewiesen werden, und
e) eine Bitgruppe (sfb) eines Datenpaketes (nb), die bei der Zuordnung zu einem logischen Kanal (sacch1) zur Übertragung der für sie spezifischen Informationsart nicht benötigt wird, zur Übertragung einer anderen Informationsart verwendet wird.

2. Verfahren nach Anspruch 1, bei dem
a) das Übertragungsverfahren auf dem GSM-Standard oder einem davon abgeleiteten Standard basiert,
b) die Stealing-Flag-Bitgruppe (sfb) eines Normal-Burst-Datenpaketes (nb) bei der Zuordnung des Normal-Burst-Datenpaketes (nb) zu einem Slow-Associated-Control-Channel (sacch1) zur Übertragung von anderen als der für sie spezifischen Informationsart verwendet wird.

3. Verfahren nach einem der vorhergehenden Ansprüche, bei dem die Stealing-Flag-Bitgruppe (sfb) eines Normal-Burst-Datenpaketes (nb) bei der Zuordnung des Normal-Burst-Datenpaketes (nb) zu einem Slow-Associated-Control-Channel (sacch) zur Übertragung von Signalisierungsinformationen über den Sprachcodec, der bei der Übertragung von Daten über den diesem Slow-Associated-Control-Channel (sacch1) zugeordneten Verkehrskanal (tchl) angewendet wird, verwendet wird.

4. Funkgerät (MS) mit
a) Mitteln zur Übertragung von Nachrichten auf der Basis von Datenpaketen, wobei ein Datenpaket mehrere Bitstellen aufweist, denen unterschiedliche Informationsarten zugeordnet sind, und durch eine informationsartspezifische Zusammenfassung von Bitstellen zu Bitgruppen innerhalb eines Datenpaketes eine Bitgruppenstruktur entsteht,
b) Mitteln zur Zuordnung von Datenpaketen gleicher Bitgruppenstruktur zu unterschiedlichen Arten von logischen Kanälen, und
c) Mitteln zur Verwendung einer Bitgruppe eines Datenpaketes, die bei der Zuordnung zu einem logischen Kanal zur Übertragung der für sie spezifischen Informationsart nicht benötigt wird, zur Übertragung einer anderen Informationsart.

5. Funkgerät (MS) nach Anspruch 5 mit
a) Mitteln zur Übertragung von Nachrichten gemäß dem GSM-Standard oder einem davon abgeleiteten Standard basiert, und
b) Mitteln zur Verwendung der Stealing-Flag-Bitgruppe eines Normal-Burst-Datenpaketes bei der Zuordnung des Normal-Burst-Datenpaketes zu einem Slow-Associated-Control-Channel zur Übertragung von anderen als der für sie spezifischen Informationsart.

6. Funkgerät (MS) nach einem der Ansprüche 5 bis 6 mit Mitteln zur Verwendung der Stealing-Flag-Bitgruppe eines Normal-Burst-Datenpaketes bei der Zuordnung des Normal-Burst-Datenpaketes zu einem Slow-Associated-Control-Channel zur Übertragung von Signalisierungsinformationen über den Sprachcodec, der bei der Übertragung von Sprachdaten über den diesem Slow-Associated-Control-Channel zugeordneten Verkehrskanal angewendet wird, verwendet wird.

## Claims

1. Method for transmitting messages, in which
a) the transmission is performed on the basis of data packets (nb),
b) a data packet has a plurality of bit positions (bs) which are assigned different types of information (tb, cnib, sfb, tsb),
c) a bit group structure is produced by information type-specific combination of bit positions to form bit groups within a data packet,
d) data packets of identical bit group structure are allocated to different types of logic channels (sacchl, tch4, tch1) and
e) a bit group (sfb) of a data packet (nb) which is not required in the case of assignment to a logic channel (sacch1) for transmitting a different type of information other than the type of information specific to it.

2. Method according to Claim 1, in which
a) the transmission method is based on the GSM standard or a standard derived therefrom,
b) the stealing flag bit group (sfb) of a normal burst data packet (nb) is used in assigning the normal burst data packet (nb) to a slow associated control channel (sacch1) for transmitting different types of information than the type of information specific to it.

3. Method according to one of the preceding claims, in which the stealing flag bit group (sfb) of a normal burst data packet (nb) is used in assigning the normal burst data packet (nb) to a slow associated control channel (sacch) for the purpose of transmitting signalling information via the speech codec which is applied in transmitting data over the traffic channel (tchl) assigned to this slow associated control channel (sacch1).

4. Radio set (MS) having
a) means for transmitting messages on the basis of data packets, a data packet having a plurality of bit positions which are assigned different types of information, and a bit group structure being produced by an information type-specific combination of bit positions to form bit groups within a data packet,
b) means for assigning data packets of identical bit group structure to different types of logic channels, and
c) means for using a bit group of a data packet which is not required in the case of assignment to a logic channel for transmitting the type of information specific to it to transmit a different type of information.

5. Radio set (MS) according to Claim 4, having
a) means for transmitting messages in accordance with the GSM standard or a standard derived therefrom, and
b) means for using the stealing flag bit group of a normal burst data packet in assigning the normal burst data packet to a slow associated control channel for transmitting different types of information than the type of information specific to it.

6. Radio set (MS) according to one of Claims 4 to 5, having means for using the stealing flag bit group of a normal burst data packet in assigning the normal burst data packet to a slow associated control channel for transmitting signalling information via the speech codec which is used in transmitting speech data over the traffic channel assigned to this slow associated control channel.

## Revendications

1. Procédé pour la transmission de messages, dans lequel :
a) la transmission s'effectue sur base de paquets de données (nb),
b) un paquet de données présente plusieurs emplacements de bits (bs) auxquels sont associés différents types d'informations (tb, cnib, sfb, tsb),
c) une structure de groupes de bits est réalisée par un rassemblement, spécifique au type d'informations, des emplacements de bits en groupes de bits à l'intérieur d'un paquet de données,
d) les paquets de données qui présentent la même structure de groupes de bits sont attribués à différents types de canaux logiques (sacch1, tch4, tch1) et
e) lors de son association à un canal logique (sacch1), un groupe de bits (sfb) d'un paquet de données (nb) qui n'est pas nécessaire pour la transmission du type d'informations qui lui est spécifique est utilisé pour la transmission d'un autre type d'information.

2. Procédé selon la revendication 1, dans lequel :
a) le procédé pour la transmission est basé sur la norme GSM ou sur une norme qui est en dérivée,
b) lors de l'association du paquet de données Normal-Burst (nb) à un Slow-Associated-Control-Channel (sacch1 ), le groupe de bits Stealing-Flag (sfb) d'un paquet de données Normal-Burst (nb) est utilisé pour la transmission d'un type d'information différent de celui qui lui est spécifique.

3. Procédé selon l'une des revendications précédentes, dans lequel, lors de l'association du paquet de données Normal-Burst (nb) à un Slow-Associated-Control-Channel (sacch), le groupe de bits Stealing-Flag (sfb) d'un paquet de données Normal-Burst (nb) est utilisé pour la transmission d'informations de signalisation sur le codeur-décodeur vocal qui est appliqué lors de la transmission de données par le canal de trafic (tch1) associé à ce Slow-Associated-Control-Channel (sacch1 ).

4. Appareil radio (MS) qui comprend :
a) des moyens pour la transmission de messages à base de paquets de données, un paquet de données présentant plusieurs emplacements de bits auxquels différents types d'informations sont associés et une structure de groupes de bits est réalisée par un rassemblement, spécifique au type d'information, des emplacements de bits en groupes de bits à l'intérieur d'un paquet de données,
b) des moyens pour l'association à différents types de canaux logiques des paquets de données qui ont la même structure de groupes de bits et
c) des moyens pour, lors de l'association à un canal logique, utiliser un groupe de bits d'un paquet de données qui n'est pas nécessaire pour la transmission du type d'information qui lui est spécifique, la transmission d'un autre type d'information.

5. Appareil radio (MS) selon la revendication 5, qui comprend:
a) des moyens pour la transmission de messages selon la norme GSM ou une norme qui en est dérivée et
b) des moyens pour, lors de l'association du paquet de données Normal-Burst à un Slow-Associated-Control-Channel, utiliser le groupe de bits Stealing-Flag d'un paquet de données Normal-Burst pour la transmission d'un type d'information différent de celui qui lui est spécifique.

6. Appareil radio (MS) selon l'une des revendications 5 à 6, qui comprend des moyens pour, lors de l'association du paquet de données Normal-Burst à un Slow-Associated-Control-Channel, utiliser le groupe de bits Stealing-Flag d'un paquet de données Normal-Burst pour la transmission des informations de signalisation sur le codeur-décodeur vocal qui est appliqué lors de la transmission de données vocales par le canal de trafic associé à ce Slow-Associated-Control-Channel.
